(19) Europäisches Patentamt
European Patent Office
Office européen des brevets

(11) **EP 1 132 716 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(51) Int Cl.:
*G01D 5/04* *(2006.01)*       *B62D 15/02* *(2006.01)*

(21) Anmeldenummer: **00127776.3**

(22) Anmeldetag: **19.12.2000**

(54) **Positionssensor**

Position sensor

Capteur de position

(84) Benannte Vertragsstaaten:
**DE FR GB IT**

(30) Priorität: **22.12.1999 DE 19962241**

(43) Veröffentlichungstag der Anmeldung:
**12.09.2001 Patentblatt 2001/37**

(73) Patentinhaber: **Bourns, Inc.**
**Riverside,**
**California 92507 (US)**

(72) Erfinder:
• **Schödlbauer, Dieter, Dr.**
  **81825 München (DE)**
• **Hochholzer, Reinhard**
  **85635 Höhenkirchen (DE)**

(74) Vertreter: **von Bülow, Tam**
**Patentanwaltskanzlei**
**Rotbuchenstrasse 6**
**81547 München (DE)**

(56) Entgegenhaltungen:
**DE-A- 2 849 918**       **DE-A- 19 506 938**

## Beschreibung

Die Erfindung bezieht sich auf einen Positionssensor gemäß dem Oberbegriff des Patentanspruches 1.

Ein derartiger Positionssensor ist beispielsweise aus der EP 0 382 334 A2 bekannt. Dort wird die Position eines Stellantriebes mit zwei Drehpotentiometern erfaßt, die jeweils mittels eines Zahnrades mit einem Zahnrad einer Welle gekoppelt sind. Beide Potentiometer sind sog. Endlos-Potentiometer, die beliebig viele volle Umdrehungen (um 360°) ausführen können. Die Zähnezahlen der Zahnräder sind so gewählt, daß das eine Potentiometer in einem vorgegebenen Meßbereich eine Anzahl n von vollen Umdrehungen durchführt, während das andere Potentiometer eine Anzahl n-1 (oder n+1) von vollen Umdrehungen durchläuft. Aus der Phasendifferenz der Ausgangssignale beider Potentiometer läßt sich ein absolutes Positionssignal ermitteln.

Ähnliche Positionssensoren sind auch in der FR 2 697 081 A1, der DE 195 06 938 A1 und der älteren, nicht vorveröffentlichten DE 198 49 554 beschrieben.

Die DE 28 49 918 A1 zeigt einen Drehstellungssensor mit einem Zahnrad, das in kämmendem Eingriff mit einer Zahnstange steht, die durch eine Feder in Richtung auf das Zahnrad mechanisch vorgespannt ist.

Ein Auswerteverfahren zur hochgenauen Auswertung von zwei Drehstellungssensoren ist auch der DE 197 47 753 C1 zu entnehmen.

Ein spezielles Anwendungsgebiet der Erfindung ist ein Lenkwinkelsensor in Kraftfahrzeugen, der die Drehstellung der Lenkwelle, die mehrere Umdrehungen durchführen kann, erfaßt. Prinzipiell läßt sich die Erfindung aber auch auf Linearsensoren anwenden, bei denen eine linear bewegte Zahnstange mit dem Zahnrad des Drehstellungssensors gekoppelt ist.

Die Meßgenauigkeit hängt unter anderem von der Präzision der Verzahnung ab. Zahnräder und Zahnstangen können durch Herstellungstoleranzen, Montagetoleranzen bezüglich der Achsabstände als auch durch Verschleiß ein Spiel haben, das man im allgemeineren Sinne auch als Schlupf bezeichnen kann und das zu Meßfehlern führt. Bei einer Drehrichtungsumkehr des Drehsensors äußert sich dieser Fehler als Hysteresefehler. Eine weitere Fehlerquelle bei Zahnrädern und Zahnstangen liegt in der mangelnden Gleichförmigkeit der Form der Zähne und der Zahnlücken, als auch in einer Ungleichförmigkeit der Verteilung der Zähne, was selbst bei spielfreiem Eingriff der Zähne zu Linearitätsfehlern führt. Hierunter fallen auch unrunde Zahnräder, was zur Folge hat, daß bei bestimmten Drehstellungsbereichen ein Spiel vorhanden ist und bei anderen Drehstellungsbereichen nicht. Dabei ist zu berücksichtigen, daß bei den meisten Meßanwendungen Kunststoffzahnräder verwendet werden.

Aufgabe der Erfindung ist es, den Positionssensor der eingangs genannten Art dahingehend zu verbessern, daß Meßfehler weitestgehend vermieden, zumindest aber verringert werden.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, das mit dem Drehstellungssensor gekoppelte Zahnrad und die mit dem beweglichen Gegenstand gekoppelte Verzahnung federelastisch gegeneinander zu verspannen.

Hierdurch wird erreicht, daß der Achsabstand zwischen der treibenden und der getriebenen Achse der Zahnräder bzw. Verzahnungen des Positionssensors variabel ist und die gekoppelten Verzahnungen stets optimal ineinandergreifen. Damit ist bei vielen Zahnformen (wie z.B. bei einer Evolventenverzahnung) mindestens ein Zahn des Zahnrades mit seiner vorderen und seiner hinteren Flanke im Eingriff mit den entsprechenden Flanken der Gegenzähne. Ein Spiel, Schlupf im obigen Sinne oder toter Gang wird damit eliminiert.

Vorzugsweise ist der bewegliche Gegenstand eine drehbare Welle und die Verzahnung ein mit der Welle verbundenes, treibendes Zahnrad, mit dem zwei Drehstellungssensoren über getriebene Zahnräder gekoppelt sind. Die Drehstellungssensoren sind dabei in Lagerelementen gelagert und die Lagerelemente werden über federelastische Spannbügel in Richtung zur Welle gedrückt.

Eine optimale Kraftverteilung erhält man, wenn die Drehachsen der Drehstellungssensoren und der Welle in einer gemeinsamen Ebene liegen.

Einen noch besseren Kraftausgleich erhält man dadurch, daß die Drehstellungssensoren an einem gemeinsamen Lagerelement gelagert sind und daß das Lagerelement mittels federelastischer Spannbügel mit einem weiteren Lagerelement verbunden ist, welches über ein weiteres getriebenes Zahnrad an dem treibenden Zahnrad abgestützt ist. Vorzugsweise sind dann alle getriebenen Zahnräder in Richtung zum Mittelpunkt des treibenden Zahnrades vorgespannt.

Nach einer Weiterbildung der Erfindung sind die getriebenen Zahnräder durch ein positionsgesichertes Lager- und Spannelement derart gegenüber dem treibenden Zahnrad fixiert, daß ihre Drehachse in Umfangsrichtung des treibenden Zahnrades ortsfest gehalten ist und sich nur radial bezogen auf den Mittelpunkt des treibenden Zahnrades bewegen kann.

Weiter sind die getriebenen Zahnräder, die Lagerelemente und die Spannbügel vorzugsweise als eine Baueinheit ausgebildet, die linear verschieblich an einer Halteplatte befestigt ist.

Zur Erhöhung der Zuverlässigkeit des Positionssensors wird am Neuteil werksseitig ein Fehlersignal ermittelt, das dem Meßfehler des Positionssensors proportional ist. Dieses Fehlersignal und ein vorgegebener Grenzwert werden abgespeichert. Während des späteren Betriebes wird ein aktuelles Fehlersignal ermittelt und überprüft, ob die beiden Fehlersignale um mehr als den gespeicherten Grenzwert voneinander abweichen, worauf ein Warnsignal erzeugt wird.

Zur Einsparung von Rechenzeit wird das werksseitig bestimmte Fehlersignal nur für eine vorbestimmte Drehstellung, vorzugsweise die Mittelstellung ermittelt und die Überprüfung des aktuellen Fehlersignals erfolgt ebenfalls nur bei dieser vorbestimmten Drehstellung.

Im folgenden wird die Erfindung anhand von Ausführungsbeispielen im Zusammenhang mit der Zeichnung ausführlicher erläutert. Es zeigt:

Fig. 1      eine Draufsicht eines Positionssensors zur Erfassung der Drehstellung einer Welle unter Verwendung eines einzigen Drehstellungssensors;

Fig. 2      eine Draufsicht eines Positionssensors zur Erfassung der Drehstellung einer Welle unter Verwendung von zwei Drehstellungssensoren, deren Drehachsen in einer Ebene mit der Drehachse der Welle liegen;

Fig. 3      einen Positionssensor zur Erfassung der Drehstellung einer Welle unter Verwendung von zwei Drehstellungssensoren nach einem weiteren Ausführungsbeispiel der Erfindung;

Fig. 3A      ein Gehäuse eines Positionssensors ähnlich Fig. 3 nach einem weiteren Ausführungsbeispiel der Erfindung;

Fig. 4      einen Positionssensor ähnlich Fig. 2 nach einem weiteren Ausführungsbeispiel der Erfindung;

Fig. 4a      einen Schnitt längs der Linie A-A der Fig. 4;

Fig. 5      eine Draufsicht eines Positionssensors ähnlich Fig. 4 nach einem weiteren Ausführungsbeispiel der Erfindung;

Fig. 6      ein Prinzipschaltbild des Positionssensors nach der Erfindung;

Fig. 7      ein Diagramm von Ausgangssignalen des Positionssensors mit zwei Drehstellungssensoren in Abhängigkeit vom Phasenfehler des ersten Drehstellungssensors;

Fig. 8      ein Diagramm des Verlaufs eines für die Fehlerüberwachung verwendeten Differenzsignals Epsilon in Abhängigkeit vom Phasenfehler des ersten Sensors;

Fig. 9      ein Diagramm von Signalwerten in Abhängigkeit vom Phasenfehler des zweiten Sensors; und

Fig. 10      den Verlauf des Differenzsignals Epsilon in Abhängigkeit vom Phasenfehler des zweiten Sensors.

Gleiche Bezugszeichen in den einzelnen Figuren bezeichnen gleiche bzw. funktionell einander entsprechende Teile.

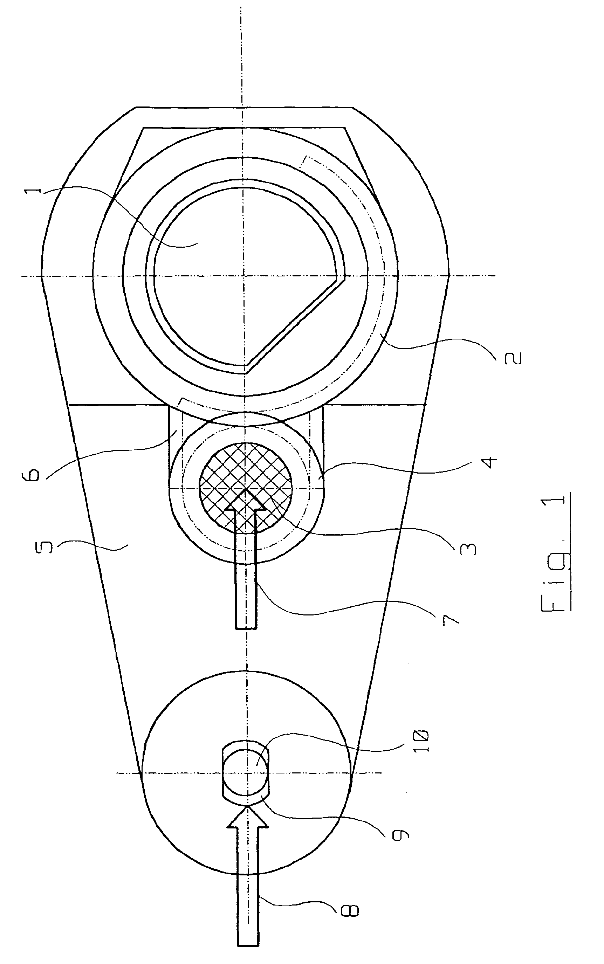

Fig. 1 zeigt eine drehbare Welle 1, die beispielsweise die Lenksäule eines Kraftfahrzeugs sein kann. An dieser Welle drehfest mit ihr verbunden ist ein Zahnrad 2 befestigt, das mit einem Zahnrad 4 in Eingriff steht, das seinerseits mit einem beweglichen Teil 3 (im folgenden Rotor 3 genannt) eines Drehstellungssensors gekoppelt ist. Das Zahnrad 2 ist dabei das treibende und das Zahnrad 4 das getriebene Zahnrad. Die Verzahnung des treibenden Zahnrades 2 geht hier nicht um den vollen Außenumfang der Welle, sondern ist auf den interessierenden Meßbereich begrenzt.

Der Rotor 3 ist an einem Lagerelement 5 gelagert, das an der Welle 1 bzw. dem treibenden Zahnrad 2 abgestützt ist, wobei das Lagerelement 5 so gestaltet ist, daß der Achsabstand zwischen der Drehachse des Sensors 3 und der Drehachse der Welle 1 variabel ist. Nach einer Variante hat das Lagerelement ein Lager 6 für den Rotor 3 in Form eines Langloches, so daß der Rotor 3 in diesem Langloch 6 verschieblich ist und durch eine federelastische Spannkraft, die durch einen Pfeil 7 angedeutet ist, gegen das treibende Zahnrad 2 gedrückt wird. Nach einer anderen Variante, die ebenfalls in Fig. 1 dargestellt ist, ist der Rotor 3 in Bezug auf das Lagerelement 5 ortsfest gelagert, wobei das gesamte Lagerelement samt Rotor 3 relativ zur Welle 1 und zum treibenden Zahnrad 2 verschieblich ist. In diesem Fall wird eine Spannkraft, die durch einen Pfeil 8 dargestellt ist, auf das Lagerelement ausgeübt, und zwar wiederum in solcher Richtung, daß das getriebene Zahnrad 4 gegen das treibende Zahnrad 2 gedrückt wird.

Das Lagerelement 5 ist beim Einbau über ein Langloch 9 an einem relativ zur Welle 1 ortsfesten Zapfen 10 abgestützt, der als Verdrehsicherung dient. Die Spannkraft 8 wirkt dabei beispielsweise zwischen dem Zapfen 10 und dem Lagerelement 5.

Generell sind also das treibende Zahnrad 2 und das getriebene Zahnrad 4 federelastisch gegeneinander vorgespannt, so daß die Zähne der beiden Zahnräder 2 und 4 spielfrei miteinander in Eingriff stehen.

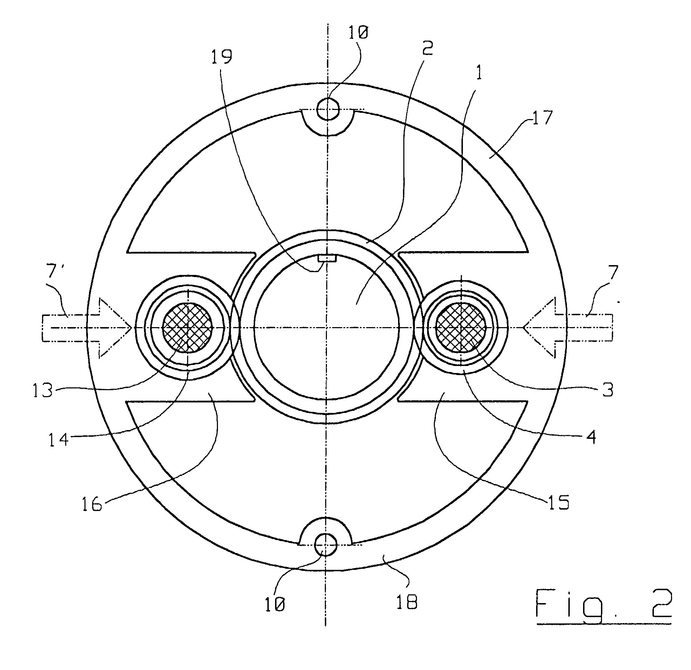

Fig. 2 zeigt eine Weiterbildung der Erfindung mit zwei beweglichen Teilen 3 und 13 von Drehstellungssensoren, die jeweils über ein Zahnrad 4 bzw. 14 mit dem Zahnrad 2 der Welle 1 gekoppelt sind. Die Drehachsen der beiden Rotoren 3 und 13 liegen beidseitig des Zahnrades 2 einander gegenüber, derart, daß die drei Drehachsen der Rotoren 3 und 13 und der Welle 1 in einer Ebene liegen. Die beiden Rotoren 3 und 13 sind je in einem Lagerelement 15 bzw. 16 gehalten. Beide Lagerelemente 15 und 16 sind über federelastische Spannbügel 17 und 18 miteinander verbunden, wobei die Spannbügel eine Spannkraft in Richtung der Pfeile 7 und 7' ausüben und damit die beiden Drehstellungssensoren 3 und 13 in Richtung zur Mitte der Welle 1 hin drücken. Auch hier sind ortsfeste Zapfen 10 und 10' vorgesehen, die in Löcher der Spannbügel 17 und 18 eingreifen und die Lagerelemente 15 und 16 und damit die Rotoren 3 und 13 verdrehsicher relativ zur Drehachse der Welle 1 halten.

Die Technologie der Drehstellungssensoren kann frei gewählt werden.

Die einzige Forderung ist hier, daß der verwendete Typ über einen vorgegebenen Weg oder Winkelbereich ein lineares Ausgangssignal erzeugt, welches sich im Nutzbereich periodisch wiederholen muß. Es kann sich beispielsweise um Hall-Sensoren, Potentiometer oder sonstige bekannte Sensoren handeln. Auf diese Weise läßt sich ein elektrisch wirksamer Meßbereich einschließen, der wesentlich größer sein kann, als die Periode eines Einzelsensors, ohne daß hierfür eine aufwendige Untersetzung notwendig wird. Es lassen sich insbesondere Absolutdrehgeber realisieren, welche für eine Positionserkennung über mehrere Umdrehungen geeignet sind. Prinzipiell ist der Einsatz von herkömmlichen Potentiometern nicht ausgeschlossen, wenn auch bevorzugt kontaktlose Positionsgeber verwendet werden. Ein geeigneter Typ ist beispielsweise in der DE 197 47 753 C1 beschrieben.

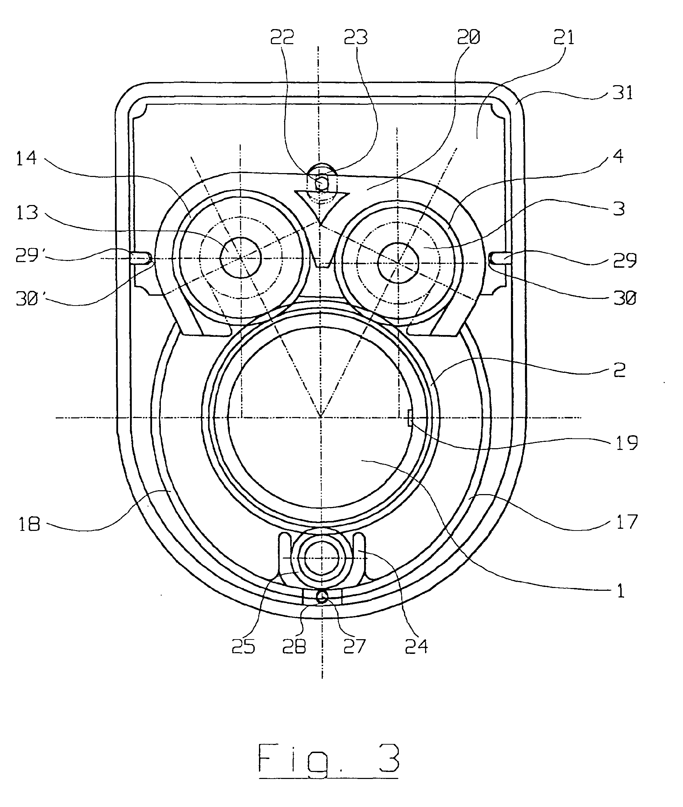

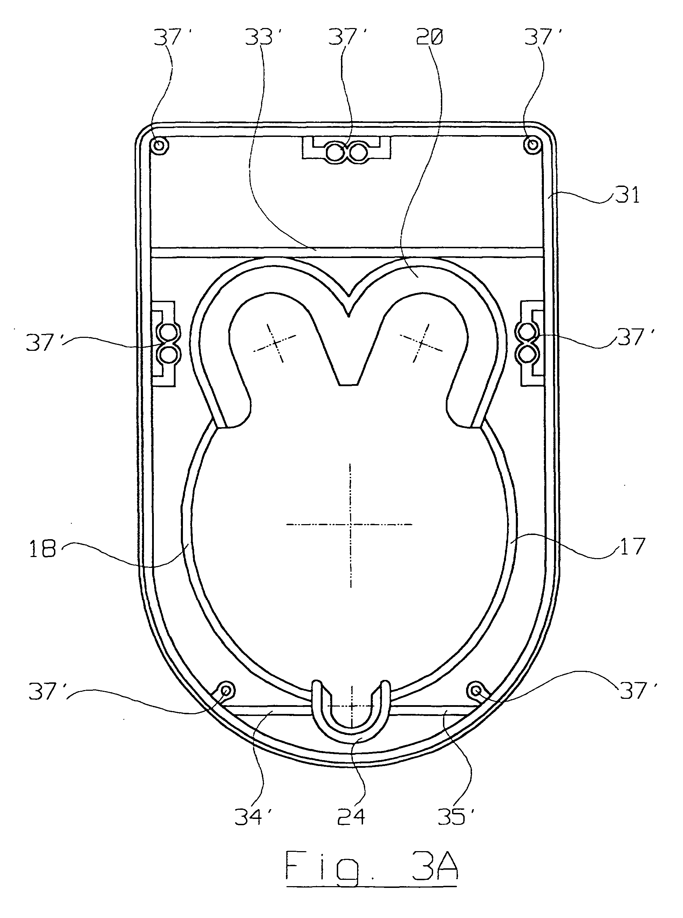

Fig. 3 zeigt eine weitere Variante der Erfindung, bei der die beiden Rotoren 3 und 13 mit ihren Zahnrädern 4 und 14 an einem gemeinsamen Lagerelement 20 gelagert sind, wobei dieses Lagerelement über zwei federelastische Spannbügel 17 und 18 mit einem weiteren Lagerelement für ein Zahnrad 25 verbunden sind, wobei dieses Zahnrad 25 ebenfalls mit dem Zahnrad 2 kämmt. Das Zahnrad 25 dient als Stützrad, das dafür sorgt, daß die Zahnräder 4 und 14 radial in Richtung zum Mittelpunkt bzw. zur Drehachse des Zahnrades 2 gedrückt werden. Die Lagerelemente 20 und 24 sowie die beiden Spannbügel 17 und 18 bilden einen rings um das Zahnrad 2 verlaufenden, geschlossenen Ringkörper, der vorzugsweise aus Kunststoff gefertigt ist. Das Lagerelement 20 ist an einer Halteplatte 21 mittels eines Zapfens 22 und eines Langloches 23 längs verschieblich gehalten, wobei die Halteplatte 21 in einem Gehäuse 31 verschieblich gehalten ist, und zwar über von der Gehäusewandung abstehende Zapfen 29 und 29' und entsprechende Ausnehmungen 30 und 30' an der Platte 21. Schließlich ist das Lagerelement 24 über einen am Gehäuse befestigten Zapfen 27 und ein Langloch 28 ebenfalls verschieblich gehalten, derart, daß das Lagerelement sich nur radial in Richtung zum Mittelpunkt des Zahnrades 2 verschieben kann, dagegen nicht in Umfangsrichtung, so daß die Zapfen 27 und 22 eine Verdrehsicherung bilden.

Aus Fig. 3 ist auch zu erkennen, daß die beiden Zahnräder 4 und 14 unterschiedlichen Durchmesser haben und damit unterschiedliche Zähnezahl. Das Zahnrad 2 ist mit einer Nut- und Federverbindung 19 drehfest an der Welle 1 gehalten.

Fig. 3A zeigt eine Draufsicht auf ein Gehäuse 31 des Positionssensors, das hier als einstückiges Kunststoff-Spritzgußteil ausgebildet ist. Das Gehäuse hat einen Rahmen, an dem die Lagerelemente 20 und 24 über federelastische Stege 33' bzw. 34' und 35' gehalten sind. Auch hier sind die Lagerelemente 20 und 24 durch zwei federelastische Spannbügel 17 und 18 miteinander verbunden und in Richtung zur Achse des hier nicht dargestellten treibenden Zahnrades hin vorgespannt. Die federelastischen Stege 33', 34' und 35' verlaufen im wesentlichen tangential zur Drehrichtung des treibenden Zahnrades und sind damit in Drehrichtung nur auf Zug bzw. Druck belastet und daher relativ starr, womit ihre Funktion als Verdrehsicherung gut gewährleistet ist. In Richtung radial auf die Achse des treibenden Zahnrades sind sie dagegen biegeelastisch und gestatten daher eine Verschiebung der Lagerelemente 20 und 24 in Richtung zur Achse des treibenden Zahnrades.

An der Innenwandung des Gehäuses sind mehrere Zapfenaufnahmen 37' angebracht, mittels derer beispielsweise eine nicht dargestellte Platine ortsfest relativ zum Gehäuse gehalten wird, wobei diese Platine unter anderem auch die ortsfesten Teile der Drehstellungssensoren trägt.

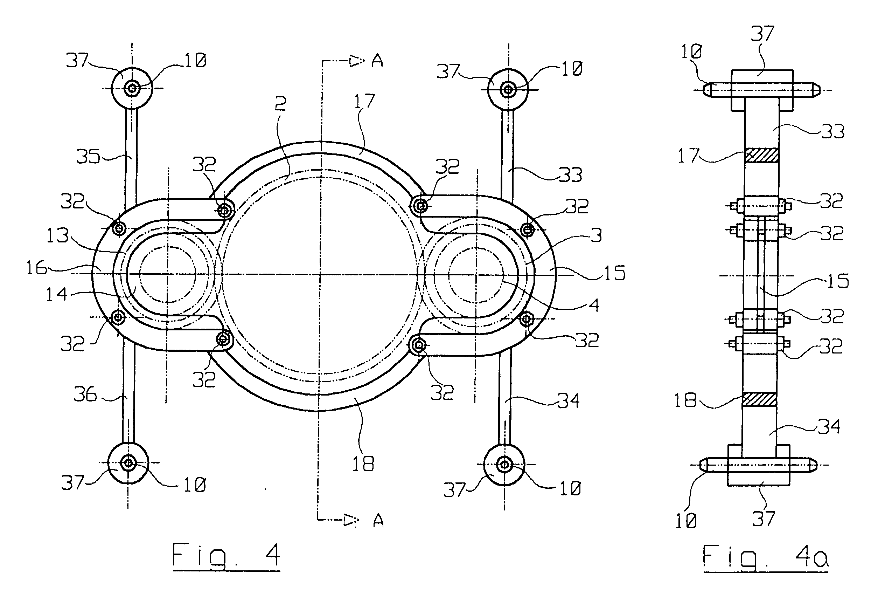

Fig. 4 zeigt eine Variante ähnlich Fig. 2 mit dem Unterschied, daß die Lagerelemente 15 und 16 sowie die Spannbügel 17 und 18 eine etwas andere Form haben und optional auch aus mehreren Teilen zusammengesetzt sein können und dann durch eine Schraub- oder Nietverbindung (vgl. 32) miteinander verbunden sind. Das Bezugszeichen 32 kann aber auch für Abstandsbolzen stehen, die die Lagerelemente gegenüber einer Platine abstützen. Die Spannbügel 17 und 18 sind mit ihren Enden jeweils mit Enden der Lagerelemente 15 bzw. 16 verbunden und kreissegmentförmig gebogen, so daß sie sich im wesentlichen parallel zur Außenkontur des treibenden Zahnrades 2 erstrecken. Auch hier ziehen bzw. drücken die Spannbügel 17 und 18 die getriebenen Zahnräder 4 und 14 radial zum Mittelpunkt des treibenden Zahnrades 2. Die Lagerelemente 15 und 16 sind je mit zwei Befestigungsarmen 33, 34 bzw. 35, 36 verbunden, an deren Enden sich je eine Zapfenaufnahme 37 befindet, zur Aufnahme und Fixierung an einem Zapfen 10, der als Verdrehsicherung dient. Je nach Einbausituation können ein oder mehrere Zapfen verwendet werden. Im Falle der Verwendung mehrerer Zapfen sind die Befestigungsarme 33-36 biegeelastisch, um eine Verschiebung der Lagerelemente 15 und 16 radial zum Zentrum des treibenden Zahnrades 2 zu gestatten. Auch ist es möglich, die Zapfen 10 fest an der Zapfenaufnahme 37 zu fixieren und in einem (nicht dargestellten) Gegenlager für die Zapfen, wie z.B. einer Halteplatte ähnlich der Platte 21 in Fig. 3, Langlöcher vorzusehen, in denen die Zapfen gleiten können.

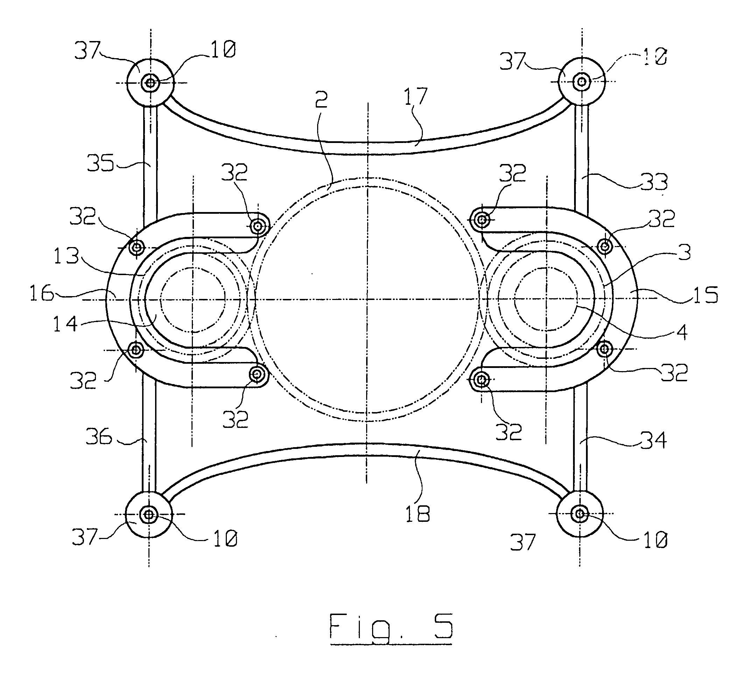

Fig. 5 zeigt eine Abwandlung der Fig. 4, bei der die Spannbügel 17 und 18 an den freien Enden der Befestigungsarme über die Spannbügel 17 bzw. 18 paarweise verbunden sind. Der Spannbügel 17 verbindet die Befestigungsarme 33 und 35, der Spannbügel 18 die Arme 34 und 36. Die Spannbügel 17 und 18 sind hier nach innen in Richtung zum treibenden Zahnrad 2 gekrümmt. Bei dieser Variante hat der Einbau so zu erfolgen, daß die Enden der Arme 33-36 geradlinig parallel zu einer die Mitte der drei Zahnräder 2, 4 und 14 verlaufenden Linie verschieblich sind. Beispielsweise können Zapfen 10 an der Zapfenaufnahme 37 befestigt sein und in Langlöchern einer nicht dargestellten Halteplatte verschieblich geführt sein.

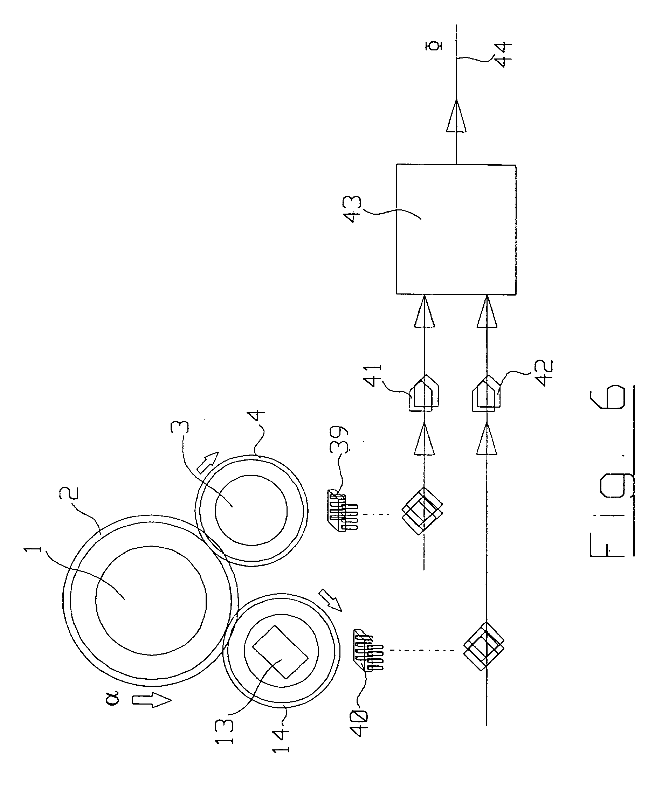

Fig. 6 zeigt ein Prinzipschaltbild des Positionssensors. Ein Winkelaufnehmer zur Erfassung der Absolutposition, speziell über mehrere Umdrehungen, besitzt in einer besonderen Ausführungsform einen zentralen Mitnehmer 1,2 sowie zwei unterschiedlich übersetzte Rotoren 3,13, welche von dem Mitnehmer angetrieben werden. Die genaue Funktionsweise eines solchen Systems wird weiter unten beschrieben.

Die beiden von dem treibenden Zahnrad 2 angetriebenen Zahnräder 4 und 14 bewegen die Rotoren 3 und 13, die hier Magnete sind. Diese wirken mit stationären Teilen 39, 40 der Sensormodule zusammen, die ein elektrisches Ausgangssignal erzeugen, das eine Funktion des Drehwinkels ist. Die Sensormodule 13,40; 3,39 können dabei ein linear vom Drehwinkel abhängiges Ausgangssignal abgeben. Es ist aber auch möglich, Sensoren zu verwenden, die in bekannter Weise ein sinus- und ein kosinusförmiges Ausgangssignal liefern, woraus dann lineare Signale ermittelt werden. Die Ausgangssignale $\Phi_1$ bzw. $\Phi_2$ der Sensormodule 39 und 40 werden je über einen Analog-/Digitalwandler 41 bzw. 42 einem Mikroprozessor 43 zugeführt, der die Signale auswertet und verarbeitet und an seinem Ausgang 44 ein dem Drehwinkel der Welle 1 entsprechendes Ausgangssignal $\Phi$ ausgibt. Dieses Signal kann vorzugsweise in digitaler aber auch in analoger Form ausgegeben werden und wird wie folgt ermittelt:

Beide Sensormodule 3,39 und 13,40 liefern an ihren Ausgängen jeweils ein sich periodisch wiederholendes Ausgangssignal als Funktion des Ortes (Winkel oder Weg). Dabei bilden die jeweiligen Ausgangssignale nach Verarbeitung im Mikroprozessor sägezahnförmige Funktionen des Winkels oder des Ortes. Die Ausgangssignale der Sensormodule werden dem Mikroprozessor 43 zugeführt, dort weiterverarbeitet und an dessen Ausgang als ein hochgenaues fehlerkorrigiertes Ausgangssignal $\phi_{fine}$ ausgegeben, das über den gesamten Meßbereich von $k_1$ Perioden des Sensors linear ist.

Hierzu wird in einem ersten Schritt ein Differenzsignal

$$\delta\Phi = \Phi_1 - \Phi_2$$

gebildet.

Der Einfachheit halber wird im folgenden angenommen, daß die Ausgangssignale der Rotoren 3 und 13 als digitalisierte Zahlenwerte vorliegen und somit in bequemerer Form für eine numerische Weiterverarbeitung zur Verfügung stehen. Um die Beschreibung möglichst universell zu halten, werden ferner sowohl der zu erfassende Gesamtweg bzw. -winkel als auch der Wertebereich der Rotoren 3 und 13 auf den Zahlenwert $2\pi$ normiert.

Das Differenzsignal $\delta\phi$ weist Sprünge der Größe $-2\pi$ auf, welche von Unstetigkeiten der beiden Signale $\phi1$ und $\phi2$ herrühren. Der gewünschte Wertebereich liegt zwischen 0 und $+2\pi$, so daß die Sprünge zu negativen Zahlen führen. Damit läßt sich eine erste Korrektur durchführen, indem die negativen Werte des Signals $\delta\phi$ um den Betrag $+2\pi$ nach oben verschoben werden. Mathematisch gilt die Bedingung:

- Ist $\delta\phi$ negativ, so wird $2\pi$ hinzuaddiert.
- Ist $\delta\phi$ gleich 0 oder größer 0, bleibt es unverändert.

Das Ergebnis dieser ersten Korrektur wird mit $\phi c$ bezeichnet. Dieses korrigierte Differenzsignal $\phi c$ läßt sich als grobgenaues, absolutes Ausgangssignal über den gesamten auszuwertenden Weg- oder Winkelbereich (Nutzbereich bzw. Meßbereich) ansehen.

Aufgrund verschiedener oben erwähnter Fehler der Sensoren sind die beiden Ausgangssignale $\phi1$ und $\phi2$ nicht beliebig genau bzw. linear. Damit ist auch das korrigierte Differenzsignal $\phi c$ nicht beliebig genau bzw. linear, sondern kann eine gewisse Welligkeit aufweisen. Um diese Fehler zu eliminieren, wird wie folgt vorgegangen. Aus dem korrigierten Differenzsignal $\phi_c$ wird die Wertigkeit der aktuellen Periode des einen Sensors bestimmt, d. h. die gültige Periodennummer multipliziert mit $2\pi$, was durch Rundung bzw. Abschneiden auf die entsprechende Ganzzahl im Bereich 0 bis k1 - 1 und Multiplikation mit $2\pi$ erfolgt. Man erhält damit ein Periodennummersignal Pnr mit der Beziehung

$$Pnr = 2\pi \cdot \text{Ganzzahl}\left(k1/2\pi \cdot \Phi c\right),$$

wobei die Funktion Ganzzahl die Operation des Abschneidens auf die entsprechende Ganzzahl bzw. das Abrunden auf die nächst niedrigere Ganzzahl bezeichnet.

Aus der aktuellen Periodennummer Pnr und dem Ausgangssignal $\phi 1$ eines der Sensoren, ergibt sich zusammen im Prinzip ein genaueres Ausgangssignal, als es das oben definierte Differenzsignal $\delta\phi$ darstellt. Mit einer Addition

$$\Phi f = Pnr + \Phi_1$$

erhält man ein feingenaues absolutes Ausgangssignal $\phi fn$, das ebenfalls noch fehlerbehaftet ist. Durch den Vorgang des Rundens bzw. des Abschneidens auf die Ganzzahl werden nämlich Periodensprünge aufgrund der nichtidealen Einzelsignale auftreten.

Durch eine Subtraktion wird daher eine Hilfsgröße $\delta\phi f$ als Differenz des fehlerhaften feingenauen Ausgangssignals $\phi f$ minus dem grobgenauen Differenzsignal $\phi c$ multipliziert mit k1 gebildet, also

$$\delta\Phi f = \Phi f - k_1 \cdot \Phi_c$$

Anhand dieses Hilfssignales lassen sich Periodensprünge feststellen und korrigieren. Dieses Hilfssignal darf sich nämlich nur im Größenbereich von $-\pi$ bis $+\pi$ bewegen. In einem Vergleich wird daher überprüft, ob das Hilfssignal $<-\pi$ ist. Ist dies der Fall, so wird das feingenaue absolute Ausgangssignal $\phi f$ um $+2\pi$ korrigiert. Ist die Bedingung dagegen nicht erfüllt, so wird in einem Vergleich geprüft, ob das Hilfssignal $>\pi$ ist. Ist dies der Fall, so wird das feingenaue absolute Ausgangssignal $\phi f$ um $-2\pi$ korrigiert. Ist auch diese Bedingung nicht erfüllt, so liegt kein Periodensprung vor und das feingenaue absolute Ausgangssignal $\phi f$ bleibt unverändert. Das Ergebnis stellt dann ein fehlerbereinigtes absolutes Ausgangssignal $\phi_{fine}$ über den gesamten Meßbereich dar. Die bis hierher dargestellte Auswertung ist in der älteren, nicht vorveröffentlichten DE-Patentanmeldung 198 49 554 beschrieben.

Auch wenn die Zahnräder in der oben beschriebenen Weise gegeneinander verspannt sind, so kann das Ausgangssignal $\phi_{fine}$ noch fehlerbehaftet sein, sei es durch Fertigungstoleranzen der Zahnräder, insbesondere hinsichtlich Zahnform und Zahnteilung, als auch durch Verschleiß. Auch ist der Fall möglich, daß bei Verwendung von zwei angetriebenen Sensoren gemäß den Ausführungsbeispielen der Fig. 2 bis 5 ein angetriebenes Zahnrad spielfrei mit dem treibenden Zahnrad kämmt, während das andere Zahnrad ein Spiel hat. Zur Lösung dieses Problems ist es möglich, solche Fehler als ein Differenzsignal $|\varepsilon|$ am Neuteil zu erfassen und zu speichern und später während des laufenden Betriebes ein entsprechendes aktuelles Differenzsignal $|\varepsilon|$ zu erfassen und zu überprüfen, ob beide Werte innerhalb eines vorgegebenen Toleranzbandes liegen.

Nachfolgend werden die Zusammenhänge dargestellt zwischen dem nutzbaren, elektrischen Drehwinkel $\phi$, der Anzahl Perioden $\Omega$ der Winkelsensoren und den notwendigen Übersetzungsverhältnissen. Des weiteren wird die Auswirkung von Phasenfehlern bei den Einzelsensoren, hervorgerufen z.B. durch mechanisches Spiel, untersucht und dabei auch eine Möglichkeit zur Erkennung solcher Fehler aufgezeigt.

Verwendete Formelzeichen und ihre Bedeutung

$\phi$      Elektrischer Drehwinkel, d.h. nutzbarer Gesamtdrehwinkelbereich

$\Omega$      Winkelperiode der verwendeten Sensorelemente, z.B. Pi ($\pi$) bei AMR-Sensoren

$z_0$      Anzahl Zähne des Mitnehmers

$z_1$      Anzahl Zähne am Treiberzahnrad für den Winkelsensor Nr. 1

$z_2$      Anzahl Zähne am Treiberzahnrad für den Winkelsensor Nr. 2

$k_1$          Anzahl Signalperioden Sensor Nr. 1 im elektrischen Drehwinkel

$k_2 = k_1 - 1$    Anzahl Signalperioden Sensor Nr. 2 im elektrischen Drehwinkel

$\Delta\alpha_i$          Phasenfehler (z.B. wegen Schlupf eines Treiberzahnrads) beim Sensor i, i = 1 oder 2

$\phi_{Fein}$        Feinsignal, d.i. das vom System ausgegebene Ausgangssignal

$\phi_{Grob}$       Grobsignal, Hilfsgröße bei der Bestimmung des Ausgangssignals $\phi_{Fein}$

$\Delta\phi$          Winkelfehler des Ausgangssignals aufgrund eines Phasenfehlers $\Delta\alpha$

$\varepsilon$           Winkeldifferenzsignal zur Überwachung auf Phasenfehler.

$\alpha_i$          Phasenwinkel des Sensors i ($0 \leq \alpha i \leq 2\pi$)

Zunächst sei der Zusammenhang zwischen dem elektrischen Drehwinkel, der Anzahl Signalperioden der Sensorelemente und den Übersetzungsverhältnissen der Zahnräder untersucht.
Mit

Sensor Nr. 1:    $k_1$ Perioden, Übersetzungsverhältnis $z_0/z_1$
Sensor Nr. 2:    $k_2 = k_1 - 1$ Perioden, Übersetzungsverhältnis $z_0/z_2$

ergibt sich

$$\frac{z_0}{z_1} \cdot \Phi = k_1 \cdot \Omega$$

d.h.

$$\frac{z_0}{z_1} \cdot \Phi = k_1 \cdot \Omega, \qquad \text{d.h.}$$

$$\boxed{\frac{z_0}{z_1} = \frac{k_1 \cdot \Omega}{\Phi}} \tag{1}$$

$$\frac{z_0}{z_2} \cdot \Phi = k_2 \cdot \Omega = (k_1 - 1) \cdot \Omega,$$

d.h.

$$\frac{z_0}{z_2} \cdot \Phi = k_2 \cdot \Omega = (k_1 - 1) \cdot \Omega \qquad , \qquad \text{d.h.}$$

$$\boxed{\frac{z_0}{z_2} = \frac{(k_1 - 1) \cdot \Omega}{\Phi}} \tag{2}$$

sowie

$$\boxed{\frac{z_2}{z_1} = \frac{k_1}{(k_1 - 1)}} \tag{3}$$

Nachfolgend werden beispielhaft Sensorelemente betrachtet, bei denen $\Omega = \pi$ gilt.

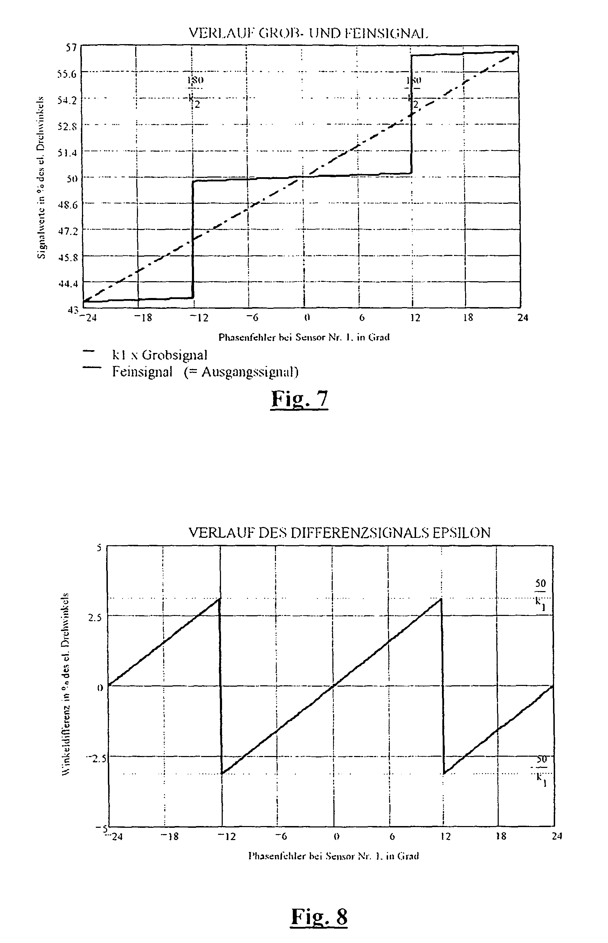

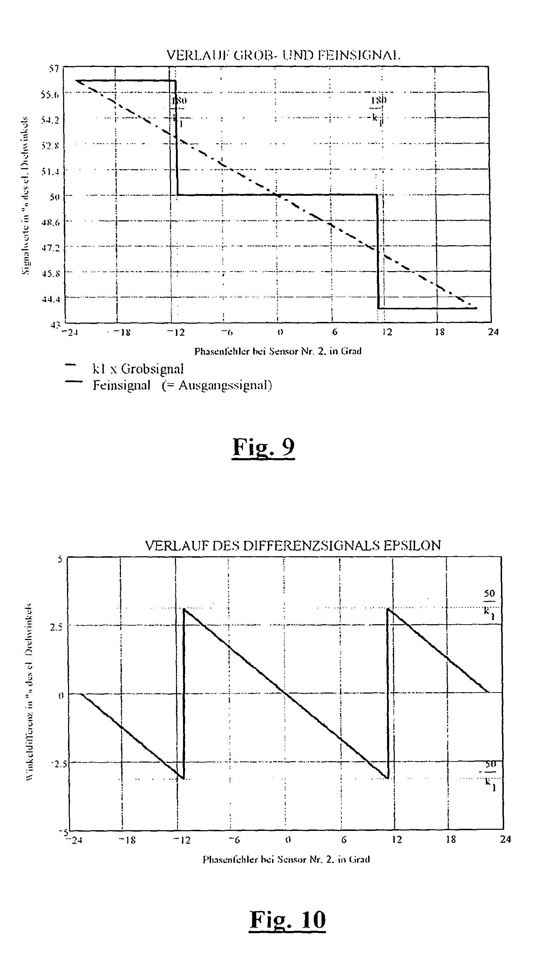

Das Verhalten des Ausgangssignals (Feinsignal $\phi_{fein}$) bei Auftreten von Phasenfehlern $\Delta\alpha$ ist in Fig. 7 und 8 dargestellt.

Gleichzeitiger Schlupf an den beiden Zahnrädern $z_1$ und $z_2$ äußert sich als Hysterese. Wenn hingegen ein Spiel nur an einem der beiden Zahnräder vorhanden ist, d.h. entweder an $z_1$ oder an $z_2$, dann verhält sich das Ausgangssignal linear zumindest in einem, vom jeweiligen Sensor abhängigen Bereich für $\Delta\alpha$ :

Sensor Nr. 1 betroffen:

$$\boxed{-\frac{\pi}{k_2} \leq \Delta\alpha_1 \leq +\frac{\pi}{k_2}} \tag{4}$$

Sensor Nr. 2 betroffen:

$$\boxed{-\frac{\pi}{k_1} \leq \Delta\alpha_2 \leq +\frac{\pi}{k_1}} \tag{5}$$

Die dabei auftretenden Winkelfehler $\Delta\phi$ des Ausgangssignals sind bei einem Phasenfehler von

a) Sensor Nr. 1:

$$\Delta\Phi = \frac{1}{2} \cdot \Delta\alpha_1 \cdot \frac{z_1}{z_0} = \frac{1}{2} \cdot \Delta\alpha_1 \cdot \frac{\Phi}{k_1 \cdot \pi} = \frac{\Omega}{2\pi} \cdot \Delta\alpha_1 \cdot \frac{z_1}{z_0}$$

(Der Faktor ½ gilt für den hier betrachteten Fall von Elementen mit der Periode $\Omega=\pi$)
Mit

$$|\Delta\alpha_1| \leq \frac{\pi}{k_2} = \frac{\pi}{(k_1-1)}$$

gilt

$$\left|\Delta\Phi\right| \leq \frac{1}{2} \cdot \frac{\pi}{(k_1-1)} \cdot \frac{\Phi}{k_1 \cdot \pi} \qquad , \qquad \left|\frac{\Delta\Phi}{\Phi}\right| \leq \frac{1}{2 \cdot (k_1-1) \cdot k_1} \qquad (6)$$

b) Sensor Nr. 2: $|\Delta\phi|$ =0 (Sensor Nr. 2 dient "nur" zur Ermittlung der Periode von Sensor Nr.1)

Zur Überwachung bezüglich möglicher Phasenfehler wird eine Relativgröße $\varepsilon$ definiert als

$$\varepsilon := \frac{k_1 \cdot \Phi_{Grob} - \Phi_{Fein}}{\Phi} \qquad (7)$$

Solange die auftretenden Phasenfehler in den durch die Gln. (4) und (5) gegebenen Grenzen sind, ist die Größe $\varepsilon$ eine lineare Funktion des Phasenfehlers, und es gilt

$$|\varepsilon| \leq \frac{\pi}{2\pi \cdot k_1} = \frac{0.5}{k_1} \qquad (8)$$

In den Fig. 7 - 10 ist die Auswirkung von Phasenfehlern auf die Ausgangssignale graphisch dargestellt, separiert für die beiden Fälle eines Phasenfehlers bei Sensor Nr. 1 (Fig. 7) bzw. bei Sensor Nr. 2 (Fig. 9). Die Berechnung bezieht sich auf ein Beispiel mit $k_1$ = 16 Perioden. Der Mitnehmer befindet sich dabei in Mittellage, d.h. das Ausgangssignal beträgt nominal $\phi_{fein}$= 50%

Durch Überwachen eines geeignet gewählten Schwellwertes für $|\varepsilon|$ läßt sich prinzipiell Schlupf o.ä. an einem der beiden Sensorzahnräder erkennen und somit ein Fehlersignal ausgeben. Um den Rechenaufwand hierfür gering zu halten, könnte man sich dabei auf eine Vorzugsposition, z.B. bei einem Lenkwinkelsensor für Kraftfahrzeuge auf die Geradeausstellung, beschränken, so daß beim Überfahren dieser Position mit $\phi_{fein}$= 50% des elektrischen Drehwinkelbereichs ein Fehler erkannt werden kann.

Zu den Phasenfehlern und deren Auswirkungen wird folgende mathematische Betrachtung angestellt:

Umformen des Ausdrucks für die Fehlergröße $\varepsilon$ :

$$\varepsilon = \frac{1}{\Phi} \cdot \Delta\alpha \cdot \frac{d}{d\alpha}(k_1 \cdot \Phi_{Grob} - \Phi_{Fein})$$

($\varepsilon$ soll linear in $\alpha$ sein)

In einem hinreichend eingeschränkten Betrachtungsintervall für $\Delta\alpha$ können die Funktionen $\phi_{Grob}$ und $\phi_{fein}$ geschrieben werden als

$$\Phi_{Grob} = \Phi_1 - \Phi_2 + c_1$$

$$\Phi_{Fein} = \Phi_1 + c_2$$

mit $\phi_1$, $\phi_2$ als die (linearen) Ausgangssignale der Einzelsensoren 1 und 2, welche als Eingangssignale für die Berechnung der Absolutposition dienen, und $c_1$, $c_2$ = const. Für die nachfolgenden Betrachtungen werden der Einfachheit halber ab jetzt $\phi_1$, $\phi_2$ hier als Phasenwinkel interpretiert mit Wertebereichen $0 \leq \phi_1$, $\phi_2 \leq 2\pi$. Der Winkel $\alpha$ ändert sich also um 360° , wenn das zugehörige Zahnrad um $\Omega$ gedreht wird. Der nutzbare Drehbereich wird auf $\phi = k_1 \cdot 2\pi$ normiert.

Damit kann dann $\varepsilon$ geschrieben werden als

$$\varepsilon = \frac{1}{\Phi} \cdot \Delta\alpha \cdot [(k_1 - 1) \cdot \frac{d\Phi_1}{d\alpha} - k_1 \cdot \frac{d\Phi_2}{d\dot\alpha}]$$

Bestimmung des Funktions- und Wertebereichs für $\varepsilon$ :

$\varepsilon$ ist nur in einem relativ engen Bereich um $\Delta\alpha$ = 0 linear und damit für eine Fehlererkennung auswertbar. Die Sprungstellen von $\varepsilon$ sind identisch mit denen von $\phi_{fein}$ und können aus der Rechenvorschrift für $\phi_{fein}$ hergeleitet werden (vgl. hierzu den 2. Korrekturschritt in der obigen Beschreibung des Auswerteverfahrens).

Unstetigkeiten treten auf wenn $|\varepsilon \cdot \phi| = \pi$ , d.h.

$$\left| k_1 \cdot \Phi_{Grob} - \Phi_{Fein} \right| = \pi$$

$$\Delta\alpha \cdot [(k_1 - 1) \cdot \frac{d\Phi_1}{d\alpha} - k_1 \cdot \frac{d\Phi_2}{d\alpha}] = \pi$$

a) Phasenfehler bei Sensor Nr. 1, d.h.

$$\frac{d\Phi_1}{d\alpha_1} = 1 \quad , \quad \frac{d\Phi_2}{d\alpha_1} = 0 \qquad ( \Phi_2 = const )$$

Sprünge treten auf bei

$$\left|\Delta\alpha_1\right| \cdot (k_1 - 1) = \pi \quad ,$$

d.h.

$$\boxed{\left|\Delta\alpha_1\right| = \frac{\pi}{k_1 - 1} = \frac{\pi}{k_2}}$$

Der zugehörige relative Drehwinkelfehler des Gesamtsystems beträgt

$$\boxed{\frac{\left|\Delta\Phi\right|}{\Phi} = \frac{\left|\Delta\alpha\right|}{k_1 \cdot 2\pi} = \frac{1}{k_1 \cdot 2\pi} \cdot \frac{\pi}{k_2} = \frac{1}{2 \cdot k_1 \cdot (k_1 - 1)}}$$

Obiges Beispiel mit $k_1$ = 16 Perioden auf 4 Umdrehungen:

$$\frac{\Delta\alpha}{\Phi} = \frac{1}{2 \cdot 16 \cdot 15} = 0.2 \ \% \quad ,$$

entsprechend 3 Grad bei Drehwinkel 1440 Grad.

Die Möglichkeit, $\varepsilon$ auszuwerten, ist in diesem Beispiel also auf einen Winkelfehlerbereich von +/- 3 Grad beschränkt.

Der Maximalwert von $\varepsilon$ ist gegeben durch

$$\left|\dot{\varepsilon}\right| = \left|\Delta\alpha_1\right| \cdot \frac{d\varepsilon}{d\alpha_1} \qquad \left|\varepsilon\right| = \frac{1}{\Phi} \cdot \left|\Delta\alpha_1\right| \cdot (k_1 - 1)$$

$$\left|\varepsilon\right| = \frac{1}{k_1 \cdot 2\pi} \cdot \pi = \frac{1}{2 \cdot k_1}$$

.

Obiges Beispiel mit $k_1$ = 16 Perioden auf 4 Umdrehungen:

$$\left|\varepsilon\right| = \frac{1}{32} = 3.125 \ \%$$

,

entsprechend 45 Grad bei Drehwinkel 1440 Grad.

b) Phasenfehler bei Sensor Nr. 2, d.h.

$$\frac{d\Phi_1}{d\alpha_2} = 0 \ , \qquad \frac{d\Phi_2}{d\alpha_2} = 1 \qquad ( \ \Phi_1 = const \ )$$

Sprünge treten auf bei

$$\left|\Delta\alpha_2\right| \cdot k_1 = \pi$$
,

d.h.

$$\left|\Delta\alpha_2\right| = \frac{\pi}{k_1}$$

Der zugehörige relative Drehwinkelfehler des Gesamtsystems beträgt wie im Fall a)

$$\frac{\left|\Delta\alpha\right|}{\Phi} = \frac{\left|\Delta\alpha\right|}{k_2 \cdot 2\pi} = \frac{1}{k_2 \cdot 2\pi} \cdot \frac{\pi}{k_1} = \frac{1}{2 \cdot k_1 \cdot (k_1 - 1)}$$

**12**

Für den Maximalwert von ε erhält man analog zu Fall a)

$$|\varepsilon| = \frac{1}{\Phi} \cdot |\Delta\alpha| \cdot k_1, \qquad \boxed{|\varepsilon| = \frac{1}{k_1 \cdot 2\pi} \cdot \pi = \frac{1}{2 \cdot k_1}}$$

Durch Überwachen von |ε| lassen sich somit Fehler, wie z.B. ein Schlupf an einem der beiden Sensorzahnräder, erkennen und daraus ein Fehlersignal ableiten. Hierzu wird die Größe |ε| am Neuteil bestimmt und zusammen mit einem Schwellwert abgespeichert. Während des Betriebes des Positionssensors wird dann das aktuelle |ε| laufend bestimmt und geprüft, ob es um mehr als den Schwellwert von dem abgespeicherten |ε| des Neuteils abweicht, worauf ein Fehlersignal ausgegeben wird. Dieses Fehlersignal kann beispielsweise einen Regler (z.B. einen Fahrdynamikregler in einem Kraftfahrzeug, der ein Lenkwinkelsignal verarbeitet) abschalten und/oder auch als Warnsignal ausgegeben werden, zur Anzeige, daß der Sensor ausgewechselt werden sollte.

Die Erfindung kann nicht nur bei den Drehstellungssensoren der Fig. 1 bis 6 angewandt werden sondern auch bei Linearwegaufnehmern, wenn diese nach dem gleichen Funktionsprinzip aufgebaut sind.

**Patentansprüche**

1. Positionssensor zur Erfassung der Drehstellung einer drehbaren Welle (1) mit einem mit der Welle (1) verbundenen treibenden Zahnrad (2) und zwei Drehstellungssensoren (3, 13), die über getriebene Zahnräder (4, 14) mit dem treibenden Zahnrad (2) gekoppelt sind,
   **dadurch gekennzeichnet,**
   **daß** die Drehstellungssensoren (3, 13) in Lagerelementen (15, 16) gelagert sind,
   **daß** die Lagerelemente (15, 16) über federelastische Spannbügel (17, 18) in Richtung zur Welle (1) gedrückt werden und
   **daß** die getriebenen Zahnräder (4, 14; 25), die Lagerelemente (15, 16, 20) und die Spannbügel (17, 18) als eine Baueinheit ausgebildet sind, die linear verschieblich an einer Halteplatte (21) befestigt ist.

2. Positionssensor nach Anspruch 1, **dadurch gekennzeichnet,**
   **daß** die Drehachsen der Drehstellungssensoren (3, 13) und der Welle (1) in einer gemeinsamen Ebene liegen.

3. Positionssensor nach Anspruch 1, **dadurch gekennzeichnet,**
   **daß** die Drehstellungssensoren (3, 13) an einem gemeinsamen Lagerelement (20) gelagert sind und daß das Lagerelement (20) mittels der federelastischen Spannbügel (17, 18) mit einem weiteren Lagerelement (24) verbunden ist, welches über ein weiteres getriebenes Zahnrad (25) an dem treibenden Zahnrad (2) abgestützt ist.

4. Positionssensor nach Anspruch 3, **dadurch gekennzeichnet,**
   **daß** alle getriebenen Zahnräder (4, 14; 25) in Richtung zum Mittelpunkt des treibenden Zahnrades (2) vorgespannt sind.

5. Positionssensor nach einem der Ansprüche 1 bis 4,
   **dadurch gekennzeichnet,**
   **daß** die getriebenen Zahnräder (4, 14; 25) durch eine Verdrehsicherung (10, 37; 22, 23; 27, 28) derart gegenüber dem treibenden Zahnrad (2) fixiert sind, daß ihre Drehachse in Umfangsrichtung des treibenden Zahnrades (2) ortsfest gehalten ist und sich nur radial bezogen auf den Mittelpunkt des treibenden Zahnrades (2) bewegen kann.

**Claims**

1. Position sensor to determine the position of a rotary shaft (1) comprising a driven toothed gear (2) connected to the shaft (1) and having two rotary position sensors (3, 13) coupled via driven toothed gears (4, 14) to the driving toothed gear (2),
   **characterized**
   **in that** the rotary position sensors (3, 13) are seated in bearing elements (15, 16),

**in that** the bearing elements (15, 16) are pressed by means of spring elastic tension bars (17, 18) in the direction of the shaft (1) and

**in that** the driven toothed gears (4, 14; 25), the bearing elements (15, 16, 20) and the tension bars (17, 18) are designed as one structure unit, which can be displaced linearly along a retaining plate (21).

**2.** Position sensor according to claim 1, **characterized in that** the axis of rotation of the rotary position sensors (3, 13) and the shaft (1) are located in a common plane.

**3.** Position sensor according to claim 1, **characterized in that** the rotary position sensors (3) are seated on a common bearing element (20) and **in that** the bearing element (20) is connected by means of the spring elastic tension bars (17, 18) to an additional bearing element (24), which is braced by means of an additional driven thoothed gear (25) against the driving toothed gear (2).

**4.** Position sensor according to claim 3, **characterized in that** all driven toothed gears (4, 14; 25) are pretensioned in the direction of the midpoint of the driving toothed gear (2).

**5.** Position sensor according to one of claims 1 to 4, **characterized in that** the driven toothed gears (4, 14; 25) are fixed in position with respect to the driving toothed gear (2) by means of a torsion stop (10, 37; 22, 23; 27, 28) in such a manner that its axis of rotation is held in place in the circumferential direction of the driving toothed gear (2) an can only move radially relative to the midpoint of the driving toothed gear (2).


**Revendications**

**1.** Capteur de position destiné à détecter la position rotative d'un arbre rotatif (1) doté d'une roue dentée motrice (2) reliée à l'arbre (1) et de deux capteurs de position rotative (3, 13), qui sont couplés par des roues dentées entraînées (4, 14) à la roue dentée motrice (2),
**caractérisé en ce que**
les capteurs de position rotative (3, 13) sont montés dans des éléments de palier (15, 16),
**en ce que** les éléments de palier (15, 16) sont pressés par des étriers de tension élastiquement déformables (17, 18) en direction de l'arbre (1) et
**en ce que** les roues dentées entraînées (4, 14 ; 25), les éléments de palier (15, 16, 20) et les étriers de tension (17, 18) sont conçus comme une unité modulaire qui est fixée de manière linéairement mobile à une plaque de maintien (21).

**2.** Capteur de position selon la revendication 1, **caractérisé en ce que**
les axes de rotation des capteurs de position rotative (3, 13) et de l'arbre (1) se situent dans un plan commun.

**3.** Capteur de position selon la revendication 1, **caractérisé en ce que**
les capteurs de position rotative (3, 13) sont montés sur un élément de palier commun (20) et **en ce que** l'élément de palier (20) est relié au moyen des étriers de tension élastiquement déformables (17, 18) à un autre élément de palier (24), lequel est appuyé par l'intermédiaire d'une autre roue dentée entraînée (25) contre la roue dentée motrice (2).

**4.** Capteur de position selon la revendication 3, **caractérisé en ce que**
toutes les roues dentées entraînées (4, 14 ; 25) sont précontraintes en direction du centre de la roue dentée motrice (2).

**5.** Capteur de position selon l'une quelconque des revendications 1 à 4,
**caractérisé en ce que**
les roues dentées entraînées (4, 14 ; 25) sont fixées par un limiteur de rotation (10, 37 ; 22, 23 ; 27, 28) par rapport à la roue dentée motrice (2) de telle sorte que leur axe de rotation est maintenu de manière stationnaire dans la direction périphérique de la roue dentée motrice (2) et ne peut se déplacer que radialement par rapport au centre de la roue dentée motrice (2).

Fig. 1

Fig. 2

Fig. 3

Fig. 3A

Fig. 4a

Fig. 4

Fig. 5

EP 1 132 716 B1

Fig. 6

VERLAUF GROB- UND FEINSIGNAL

— k1 x Grobsignal
— Feinsignal  (= Ausgangssignal)

**Fig. 7**

VERLAUF DES DIFFERENZSIGNALS EPSILON

**Fig. 8**

**VERLAUF GROB- UND FEINSIGNAL**

—  kl x Grobsignal
—  Feinsignal  (= Ausgangssignal)

**Fig. 9**

**VERLAUF DES DIFFERENZSIGNALS EPSILON**

**Fig. 10**